(19) **Europäisches Patentamt**
**European Patent Office**
**Office européen des brevets**

(11) **EP 2 437 536 B1**

(12) **EUROPEAN PATENT SPECIFICATION**

(45) Date of publication and mention
of the grant of the patent:
**25.04.2018 Bulletin 2018/17**

(51) Int Cl.:
***H04W 24/02*** *(2009.01)*     ***H04L 12/24*** *(2006.01)*
***H04W 52/02*** *(2009.01)*

(21) Application number: **10306054.7**

(22) Date of filing: **29.09.2010**

(54) **Method and device to manage cells in a cellular network**

Verfahren und Vorrichtung zur Verwaltung von Zellen in einem zellulären Netzwerk

Procédé et dispositif pour gérer des cellules dans un réseau cellulaire

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**04.04.2012 Bulletin 2012/14**

(73) Proprietor: **Alcatel Lucent**
**91620 Nozay (FR)**

(72) Inventors:
• **Capdevielle, Véronique**
**91620 Nozay (FR)**
• **Feki, Afef**
**91620 Nozay (FR)**
• **Balageas, Carine**
**91620 Nozay (FR)**

(74) Representative: **Renoult, Adrien et al**
**Alcatel-Lucent International**
**Patent Business**
**Site Nokia Paris Saclay**
**Route de Villejust**
**91620 Nozay (FR)**

(56) References cited:
**US-A1- 2004 117 226**

• **OLIVER BLUME ET AL: "Energy savings in
mobile networks based on adaptation to traffic
statistics", BELL LABS TECHNICAL JOURNAL,
WILEY, CA, US, vol. 15, no. 2, 1 September 2010
(2010-09-01), pages 77-94, XP001555947, ISSN:
1089-7089, DOI: DOI:10.1002/BLTJ.20442**

## Description

The technical domain of the invention is the domain of cellular communication networks.

More particularly, the invention concerns a method to manage cells.

In a cellular network, traffic demand varies depending on time (e.g. the hour in the day) and depending on the area covered by a cell. For instance, cells covering business areas are experiencing high traffic during business hours, while cells covering residential areas are experiencing high traffic during free time hours. Consequently, capacity needs to be boosted during some given hours and over some areas. This typically corresponds to a "throughput boost" operating mode of the cell.

To the contrary, when traffic activity is weak, the probability of unused cells becomes high. In particular when there are few or no active users (e.g. at night), keeping a cell in active state results in waste of power. In this case it is possible to switch off some of the cells in a neighbourhood. This typically corresponds to a "energy saving" operating mode of the cell.

Other operating modes are also possible. The paper of Olivier BLUME et al.: "Energy savings in mobile networks based on adaptation to traffic statistics", Bell Labs Technical Journal, Wiley, CA, US, Vol. 15, No. 2, 1 September 2010, pages 77-94, discloses a discussion about the waste of energy in mobile networks because of the very unevenly distributed load. It proposes switching off unnecessary cells, modifying the radio topology and reducing the radiated power with method such a bandwidth shrinking and cell micro-sleep.

US 2004/117226 discloses a method for configuring a network, wherein the network comprises a plurality of network sections, the method comprising the steps of accessing data from network sections; forming groups of network sections using a clustering method by using at least part of the accessed data as input data; and processing parameter on network section group level. By this method, the operation load during optimizing a network consisting of a large number of cells can be greatly reduced. Each operating mode results in a particular set of signalling messages between cells. Since each signalling set is different from another and coexistence of said signalling sets may lead to signalling overload, it should be advantageous not to implement them at the same time. In accordance with the invention the aforementioned objectives are accomplished by the method of claim 1 and the device of claim 14.

According to an embodiment a method and a device in a cellular network are able to identify sets of cells sharing a common traffic profile depending on time and to manage said cells accordingly.

According to an embodiment, the method manage cells in a cellular network, each cell being able to function in an operating mode selected from among at least "throughput boost" and "energy saving", wherein in "throughput boost" operating mode a cell is configured to optimize throughput, wherein in "energy saving" operating mode a cell is configured to reduce energy consumption, comprising the steps of:

- gathering cells into at least one cluster,
- configuring cells pertaining to a same cluster to simultaneously change their operating mode according to a common time profile,

characterized in that the common time profile is determined for a cluster by ORing the time profiles of the cells pertaining to said cluster, with priority to the most demanding operating mode.

According to an embodiment, in "throughput boost" operating mode a cell uses a "throughput boost" dedicated signalling to dialog with its neighbour cells and applies coordinated spectrum sharing techniques in order to optimize the respective usage of radio spectrum by said cells so as to globally reduce interferences and thus optimize throughput.

According to an embodiment, in "energy saving" operating mode a cell uses an "energy saving" dedicated signalling to dialog with its neighbour cells and performs energy consumption reduction techniques so as to globally reduce energy consumption.

According to an embodiment, the gathering step further comprises gathering cells whose geographical positions are distant two-by-two by less than a given threshold into a cluster.

According to an embodiment, the gathering step further comprises gathering cells whose profiles are globally distant by less than a given threshold into a cluster.

According to an embodiment, the geographical distance is computed using a k-Minkowski metric.

According to an embodiment, a load profile comprises an array indexed on time periods and comprising at least one load value over each said time period.

According to an embodiment, a time profile is determined, for each cell, out of load profile, by selecting, for each time period, an operating mode, by comparing said at least one load value with at least one threshold.

According to an embodiment, a profile distance is computed using a k-Minkowski metric applied to respective switching times between operating modes.

According to an embodiment a cluster forming device, is able to manage cells in a cellular network, each cell being able to function in an operating mode selected among at least "throughput boost" and "energy saving", wherein in "throughput boost" operating mode a cell is configured to optimize throughput, wherein in "energy saving" operating mode a cell is configured to save energy, comprising:

- gathering means for gathering cells into at least one cluster,
- configuring means for configuring cells pertaining to a same cluster to simultaneously change their operating mode according to a common time profile,

characterized in that the common time profile is determined for a cluster by ORing the time profiles of the cells pertaining to said cluster, with priority to the most demanding operating mode.

Others features, details and advantages of the invention will become more apparent from the detailed illustrating description given hereafter with respect to the drawings on which:

- figures 1-3 are schematic maps of an illustrative cellular network,
- figure 4 is a sample of a load profile,
- figure 5-7 are samples of time profiles.

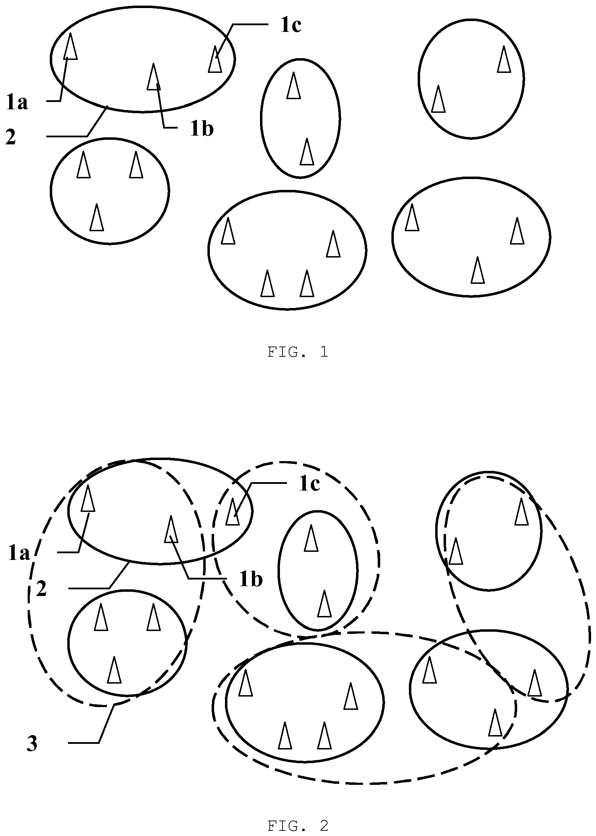

Figures 1-3 show an illustrative cellular network comprising cells 1a-1c generically referred to by 1. A cell 1 in the present application is to be understood as an area covered by the radio range of a base station pertaining to the cellular network, and also, by extension, as said base station itself.

In a cellular network, traffic demand varies depending on time and depending on the area covered by a cell 1. Consequently, the operating mode of a cell 1 may accordingly be defined among several operating modes.

During some rush hours, capacity, in term of throughput, benefits from being boosted. This typically corresponds to a "throughput boost" operating mode of the cell 1. One possible way of boosting capacity is by reducing the radiofrequency interferences between neighbouring cells 1. This goal may be reached by employing an adapted set of signalling messages between said cells 1. With such a dedicated signalling set, neighbouring cells 1 dialog between them in order to apply coordinated spectrum sharing techniques so as to optimize the respective usage of radio spectrum between said cells 1. This allows to globally reduce interferences in said neighbourhood and thus to optimize throughput. Inter Cell Interference Cancellation (ICIC) is a possible example of such coordinated spectrum sharing techniques.

At the opposite, when traffic activity is weak, the probability of unused cells becomes high. In particular when there are few or no active users it is possible to switch off some of the cells in a neighbourhood. This typically corresponds to an "energy saving" operating mode of the cell 1. An efficient illustrative way to reduce a cell's power consumption is e.g. to turn a cell off or at least to turn off its most consuming element, the radiofrequency part. Unfortunately, such switching off of a cell creates a hole in the network coverage. Such hole coverage may be compensated by an increase in the range covered by at least one cell neighbour to the switched off cell. The management of dynamic switching on/off of the cells thus benefits from a specific set of signalling messages among cells 1. Cells then dialog between them in order to determine how many and which cells 1 are to be switched off, and which cells among the switched on cells must increase their covered range so as to compensate by filling an eventual coverage hole.

Other operating modes are also possible. An example could be a "normal" mode with neither interference management nor energy saving. When traffic activity is moderate or weak, a sufficient performance may be reached without applying coordinated spectrum sharing techniques, while however the throughput demand prohibits any energy saving attempt.

Each operating mode may result in the use of a particular set of signalling messages adapted to specific dialog needs between some cells. Since each set of signalling messages is different from the other, and coexistence of said signalling sets may lead to signalling overload, it should be advantageous not to implement them at the same time. Moreover, cooperating or dialoguing cells benefit from using a common signalling set, and thus being in the same operating mode at the same time.

Taken these considerations into account, a method to manage cells 1 according to one embodiment comprises the steps of:

- gathering cells 1 into at least one cluster 4,
- configuring cells 1 pertaining to a same cluster 4 to simultaneously change their operating mode according to a common time profile.

A cluster 4 thus advantageously gathers cells 1 that can benefit from being in the same operating mode at the same time, and if applying, from using a common signalling set at the same time.

Thus all cells in a cluster are in the same operating mode at the same time and change from one operating mode to another also at the same time.

All cells 1 in a given cluster 4, wherein in "throughput boost" operating mode use a "throughput boost" dedicated signalling set to dialog between them and apply coordinated spectrum sharing techniques in order to optimize the respective usage of spectrum by said cells 1 so as to globally reduce interferences and thus optimize throughput.

All cells 1 in a given cluster 4, wherein in "energy saving" operating mode use an "energy saving" dedicated signalling set to dialog between them and performs energy consumption reduction techniques so as to globally reduce energy consumption by said cells 1.

The gathering step used to build a cluster 4 may comprise several independently or successively applied operations based on different criterions.

Since neighbouring is relevant either to throughput boosting, e.g. when dealing with interference avoidance management, or to energy saving, e.g. when determining which cell(s) had to extend its range to compensate for a hole coverage, a criterion may be the geographical distance between the respective geographical positions of cells 1. A cluster 4 can then be built by gathering cells 1 which are distant two-by-two by less than a given distance threshold.

Two-by-two is here to be understood in the following way. A new cell may be gathered in a cluster 4 if it is distant from at least one of the cell already gathered in said cluster 4 of less than the threshold. This does not mean the new cell is distant from all the cells of the cluster 4 from less than the threshold. For instance, with reference to figure 1, cell 1a may be distant from cell 1b of less than the threshold and cell 1b may be distant from cell 1c of less than the threshold. Then cells 1a, 1b and 1c may be gathered in a cluster on a geographical distance criterion. However this does not necessarily imply that cell 1a is distant from cell 1c of less than the threshold. In other words, geographical distance is here used as an "agglomeration" criterion instead of a global criterion.

Figure 1 represents an example of gathering cells into groups according to a geographical distance criterion. Cells 1a-1c are gathered into a group 2. If the geographical distance criterion is used alone, said group(s) 2 are clusters.

Geographical positions of the cells 1 may be compared by any kind of adapted metric. One possible metric is a distance computed using a k-Minkowski metric.

A k-Minkovsky metric between two points $p=(p_1,p_2)$ and $q=(q_1,q_2)$ can be given by $d^k(p,q)=[|p_1-q_1|^k+|p_2-q_2|^k]^{1/k}$. With k=2, it gives an euclidian distance. With k=∞, it gives the max distance, $d_{\max}(p,q)=\max[|p_1-q_1|,|p_2-q_2|]$. Such k-metrics may be generalized from 2 to n coordinates $(p_1,p_{i,...},p_n)$ for each point.

Considering a geographical distance criterion is advantageous in that, either for throughput boosting or for energy saving purposes, neighbouring cells benefits from sharing a specific signalling set.

However, as already mentioned, cells can also takes advantage of sharing a same operating mode when they effectively share a same time profile, in order to implement coordinated functioning.

A load profile may be defined for each cell 1 and comprises a mean to indicate how a cell 1 is loaded in function of the time. Said load may be e.g. a throughput or can also be detailed by type of traffic, e.g. a throughput for a best effort traffic type, a throughput for constant flow traffic type (such as e.g. VoIP), and a throughput for constraint delay traffic. The load is indicated with respect to time, using a calendar. Said calendar is advantageously periodic and may cover a period of e.g. a day, a week, a month... or else.

Given such a profile for each cell 1 in the network, gathering cells 1 may be done by comparing said profiles and gathering in a cluster 4 cells 1 that show similar profiles.

Cells 1 may then be gathered in a cluster 4 when their respective time profiles are globally distant by less than a given threshold.

Globally is here to be understood in the following way. A new cell 1 may be gathered in a cluster 4 if its profile is distant from the profile of all of the cells 1 already gathered in said cluster 4, or of an "average" profile of the cluster 4, of less than the threshold. In other words, profile distance is here used as a global criterion instead of an "agglomeration" criterion.

Depending on the format of the profiles, they may be compared by any kind of adapted metric. A load profile may e.g. be expressed as an array indexed on time periods. To each time period is associated at least one load value corresponding to the observed load over each said time period.

The periods of time may be constant, e.g. 1 hour long, or corresponding to meaningful periods such as e.g. morning (9:00 - 12:00), noon (12:00 - 13:00), after noon (13:00 - 18:00), evening (18:00 - 22:00) and night (22:00 - 9:00) or any other partition that fits traffic profiles and reality of cell usage.

The load value of said array indexed on said time periods can be for each said time period one single traffic value. This value can be determined as a mean traffic demand over said time period.

Said load value can also comprises one traffic value for each type of traffic serviced by the cell 1.

Said load value can also comprises a weighted mean of the traffic values of each type of traffic. In that last case, it is advantageous to have the respective weights of said weighted mean as higher as the type of traffic is delay sensitive. So doing the weighted mean is more increased when a more delay sensitive traffic is present, thus directing the choice toward a more demanding operating mode.

Said different modelling of the load profile leads to adapted metrics to realize a profile distance in order to compare them, as would be apparent to the one skilled in the art.

The two previous illustrative criterions, geographical distance and profile distance can be applied alone and separately to determine which cells 1 are gathered in which clusters 4. In addition other criterions may be used by the one skilled in the art.

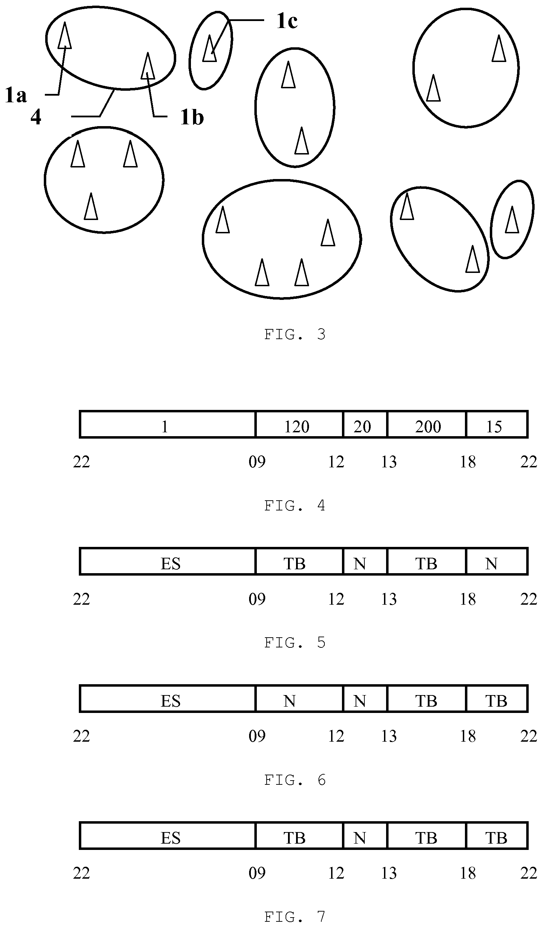

According to a preferred embodiment, said both criterions may be applied together and successively in the following advantageous manner. As illustrated in figure 1, the distance criterion is first applied. All cells 1 are then gathered in groups, six in the example of the figure 1. Cells 1a-1c are gathered in a group 2. Then, as illustrated in figure 2, the load vs. time profile criterion is applied. Cells are then gathered in sets, four in the example of the figure 2, with an illustrative set 3 figured. Said sets 3 does not necessarily superpose with the previous groups 2. Finally as illustrated in figure 3, clusters are determined by intersecting the groups 2 and the sets 3. The example cluster 4 gathers cells 1a and 1b which both pertain to a same group 2 and to a same set 3. Cell 1c pertaining to the same group 2 but not pertaining to the same set 3 is let to be gathered in a different cluster. Said process then lead to clusters 4, eight in the illustrative example of figure 3, that gather cells which are both distant two-by-two by less than a given threshold, and globally exhibit similar load profiles.

As a preferred embodiment, it is advantageous that the clusters 4 form a partition of the network, that is, every cell 1 pertains to exactly one cluster 4.

So organized in clusters 4, cells 1 of a same cluster 4 can be configured to simultaneously change their operating mode according to a common time profile.

Said time profile corresponds to a "mean" calendar of all the load profiles of the cells 1 of said cluster 4. It can e.g. be determined, for each cell 1, out of load profile. On possible way, is by keeping the same calendar or indexation by time periods, to determine an associated operating mode, for each said time period.

A time profile may e.g. be expressed as an array indexed on the same time periods as the load profiles. The array value is instead an operating mode. Said operating mode may be determined by comparing said at least one load value with at least one threshold.

For instance with three operating modes: "energy saving", "normal", "throughput boost", each operating mode corresponds, in this order, to an increasing load demand. Two thresholds may then be used. If the load value is lesser than a first low threshold, operating mode would be "energy saving". If the load value is higher than said first low threshold, but lesser than a second high threshold, operating mode would be "normal". If the load value is higher than said second high threshold, operating mode would be "throughput boost".

It can be noted that if load value is multivalued, e.g. with a traffic value by traffic type, a single weighted mean value may advantageously be used instead.

Figure 4 shows an example of a load profile for a cell. Said profile is defined over five time periods: night (between 22:00 and 09:00), morning (between 09:00 and 12:00), noon (between 12:00 and 13:00), afternoon (between 13:00 and 18:00), and evening (between 18:00 and 22:00). In each box, corresponding to a time period, is figured a traffic value.

Let us consider two thresholds: a first low threshold of 10, between "energy saving" and "normal" and a second high threshold of 100, between "normal" and "throughput boost". This leads to the time profile illustrated in figure 5. Said time profile is defined over the same five time periods. In each box, corresponding to a time period, is figured an operating mode abbreviated as follow: "energy saving" = ES, "normal" = N, "throughput boost" = TB.

According to another advantageous embodiment, the threshold comparing step may be done with a hysteresis. In that case, the "history" is taken into account. Let us consider a first time period has been assigned an "energy saving" mode. The following (along time axis) time period would preferably be assigned the same operating mode. Switching operating mode, here e.g. to "normal" can only be considered if the load value exceeds the threshold by a hysteresis margin. Similarly, let us consider a time period has been assigned a "normal" mode. The following time period would preferably be assigned the same operating mode. Switching operating mode, here e.g. back to "energy saving" can only be considered if the load value is lesser than the threshold by a hysteresis margin.

According to an embodiment, the profile distance, measuring the similarity between the profiles of at least two cells, can advantageously be computed by considering the respective switching times of each profile. A switching time is a time in a time profile where the operating mode changes. A switching time is then typed by both the initial operating mode and the final operating mode.

As an illustration, when considering the two operating modes "throughput boosting" and "energy saving", respectively abbreviated "tb" and "es", there is two types of switching times $t_1 = t_{tb->es}$ for the switching time corresponding to the transition "tb" to "es" and $t_2 = t_{es->tb}$ for the switching time corresponding to the inverse transition "es" to "tb". When considering three operating modes, they would be six types of switching times, corresponding to six modes transitions.

Two cell's profiles are thus as similar as the switching times of each type are closer.

Let us consider $t_{ij}$ the switching time of type i for cell j, a profile distance between the profile of cell C1 and cell C2 may be expressed by e.g. a k-Minkovsky metric given by

$$d^k(C_1, C_2) = \left[ \sum_i \left| t_{i,C_1} - t_{i,C_2} \right|^k \right]^{1/k}$$ With k=2, it gives an euclidian distance. With k=∞, it gives the max distance

$$d(C_1, C_2) = \underset{i}{Max} \left| t_{i,C_1} - t_{i,C_2} \right|.$$ The

similarity of at least two profiles may then be acknowledged by said distance being lesser than a given acceptation threshold.

Given all the time profiles so obtained for all cells 1 from a given cluster 4, a common time profile for the cluster 4 may be determined to pilot the simultaneous operating mode changes of all the cells 1. One possible embodiment to determine said common time profile is by ORing the time profiles of the cells 1 pertaining to said cluster 4, the OR operator giving the priority to the most demanding operating mode.

This is illustrated with reference to figures 5, 6 and 7. At figure 5 the time profile of a first cell is figured. At figure 6 the time profile of a second cell is figured. At figure 7 the common time profile resulting from the ORing operation of the two previous time profiles is figured. Since said first and second cells 1 pertain to the same cluster 4, they show quite similar time profiles. However some differences may appear. Since only one common time profile may be determined for the cluster 4, a time profile corresponding to the most demanding operating mode may e.g. be retained. With the illustrative operating modes of "energy saving", "normal" and "throughput boost", "normal" is more demanding than "energy saving" and "throughput boost" is more demanding than "normal". During the morning time period, between 9:00 and 12:00, the first cell is in "throughput boost", TB, while the second cell is in "normal", N. Accordingly the resulting time profile will be in the most demanding mode of the two, that is, in "throughput boost" over said morning time period.

According to a preferred embodiment, a profile of a cell may be collected by the cell itself. Said collection may be done by statistically observing the traffic demand over each time period. Said profile may be determined only one time or may be dynamically reviewed when sufficient changes are observed. Any known method of filtering may be applied. All profiles are advantageously transferred by each cell to a centralized device such as the following cluster forming device.

All the steps of said managing method may be applied by a particular device, named cluster forming device. Said device is able to manage cells according to the aforementioned method. Said cluster forming device is typically a centralised device. It can be included in either one of the cells, acting as a cell controller. It can also be included in an umbrella like cell in the case of a hierarchical network.

**Claims**

1. A method to manage cells (1) in a cellular network, each cell (1) being able to function in an operating mode selected among at least "throughput boost" and "energy saving", wherein in "throughput boost" operating mode a cell (1) is configured to optimize throughput, wherein in "energy saving" operating mode a cell (1) is configured to reduce energy consumption, comprising the steps of:

   - gathering cells (1) into at least one cluster (4),
   - configuring cells (1) pertaining to a same cluster (4) to simultaneously change their operating mode according to a common time profile,

   **characterized in that** said common time profile is determined for a cluster (4) by ORing the time profiles of the cells (1) pertaining to said cluster (4), with priority to the most demanding operating mode, whereby the "throughput boost" operating mode is more demanding than a "normal" operating mode, which in turn is more demanding than the "energy saving" operating mode.

2. The method of claim **1,** wherein in "throughput boost" operating mode a cell (1) uses a "throughput boost" dedicated signalling set to dialog with its neighbour cells (1) and applies coordinated spectrum sharing techniques in order to optimize the respective usage of radio spectrum by said cells (1) so as to globally reduce interferences and thus optimize throughput.

3. The method of claim **1** or **2,** wherein in "energy saving" operating mode a cell (1) uses an "energy saving" dedicated signalling set to dialog with its neighbour cells (1) and performs energy consumption reduction techniques so as to globally reduce energy consumption.

4. The method of any one of claims **1** to **3,** wherein the gathering step further comprises:

   - gathering cells (1) whose geographical positions are distant two-by-two by less than a given threshold into a cluster (4).

5. The method of any one of claims **1** to **4,** wherein the gathering step further comprises:

   - gathering cells (1) whose profiles are globally distant by less than a given threshold into a cluster (4).

6. The method of claim 4 or claim **5,** wherein the geographical distance is computed using a k-Minkowski metric.

7. The method of any one of claims **1** to **6,** wherein a load profile comprises an array indexed on time periods and comprising at least one load value over each said time period.

8. The method of claim **7,** wherein said at least one load value comprises a weighted mean of the traffic values of each type of traffic.

9. The method of claim **8,** wherein the respective weights of said weighted mean are as higher as the type of traffic is delay sensitive.

10. The method of any one of claims **1** to **9,** wherein a time profile is determined, for each cell (1), out of load profile, by selecting, for each time period, an operating mode, by comparing said at least one load value with at least one threshold.

11. The method of claim **10,** wherein said comparing step is done with a hysteresis.

12. The method of claim **10** or **11,** wherein a profile distance is computed using a k-Minkowski metric applied to respective switching times between operating modes as found in the respective time profiles.

13. The method of any one of claims **1** to **12,** wherein a profile of a cell (1) is collected by the cell (1) itself.

14. A cluster forming device, able to manage cells (1) in a cellular network, each cell (1) being able to function in an operating mode selected among at least "throughput boost" and "energy saving", wherein in "throughput boost" operating mode a cell (1) is configured to optimize throughput, wherein in "energy saving" operating mode a cell (1) is configured to reduce energy consumption, comprising:

- gathering means for gathering cells (1) into at least one cluster (4),
- configuring means for configuring cells (1) pertaining to a same cluster (4) to simultaneously change their operating mode according to a common time profile,

**characterized in that** said common time profile is determined for a cluster (4) by ORing the time profiles of the cells (1) pertaining to said cluster (4), with priority to the most demanding operating mode, whereby the "throughput boost" operating mode is more demanding than a "normal" operating mode, which in turn is more demanding than the "energy saving" operating mode.

**Patentansprüche**

1. Verfahren zum Verwalten von Zellen (1) in einem zellularen Netzwerk, wobei jede Zelle (1) in der Lage ist, in einem Betriebsmodus zu funktionieren, der ausgewählt wird mindestens aus "Durchsatzerhöhung" und "Energiesparen", wobei im Betriebsmodus "Durchsatzerhöhung" eine Zelle (1) konfiguriert ist zum Optimieren des Durchsatzes, während im Betriebsmodus "Energiesparen" eine Zelle (1) konfiguriert ist zum Reduzieren des Energieverbrauchs, umfassend die folgenden Schritte:

- Zusammenstellen von Zellen (1) in mindestens einem Cluster (4),
- Konfigurieren von Zellen (1), die zum selben Cluster (4) gehören, zum gleichzeitigen Ändern ihres Betriebsmodus gemäß einem gemeinsamen Zeitprofil,

**dadurch gekennzeichnet, dass** besagtes gemeinsame Zeitprofil für ein Cluster (4) bestimmt wird durch Ordnen der Zeitprofile der Zellen (1), die zu besagtem Cluster (4) gehören, mit Priorität bezüglich des anspruchsvollsten Betriebsmodus, wobei der Betriebsmodus "Durchsatzerhöhung" anspruchsvoller ist als ein "normaler" Betriebsmodus, welcher wiederum anspruchsvoller ist als der Betriebsmodus "Energiesparen".

2. Verfahren nach Anspruch **1,** wobei beim Betriebsmodus "Durchsatzerhöhung" eine Zelle (1) einen für "Durchsatzerhöhung" dedizierten Signalisierungssatz verwendet, um mit ihren Nachbarzellen (1) zu kommunizieren, und koordinierte Techniken zur gemeinsamen Spektrenbenutzung anwendet, um den entsprechenden Gebrauch eines Funkspektrums durch besagte Zellen (1) zu optimieren, globale Interferenzen zu reduzieren und somit den Durchsatz zu optimieren.

3. Verfahren nach Anspruch **1** oder **2,** wobei der Betriebsmodus "Energiesparen" einer Zelle (1) einen für "Durchsatzerhöhung" dedizierten Signalisierungssatz verwendet, um mit ihren Nachbarzellen (1) zu kommunizieren, und Techniken zur Reduzierung des Energieverbrauchs durchführt, um den Energieverbrauch global zu reduzieren.

4. Verfahren nach einem beliebigen der Ansprüche **1** bis **3,** wobei der Zusammenstellungsschritt weiterhin umfasst:

- Zusammenstellen von Zellen (1), deren geografische Positionen paarweise weniger als ein gegebener Schwellenwert in einem Cluster (4) entfernt sind.

5. Verfahren nach einem beliebigen der Ansprüche **1** bis **4,** wobei der Zusammenstellungsschritt weiterhin umfasst:

- Zusammenstellen von Zellen (1), deren Profile global weniger als ein gegebener Schwellenwert in einem Cluster (4) entfernt sind.

6. Verfahren nach Anspruch **4** oder Anspruch **5,** wobei der geografische Abstand mittels einer k-Minkowski-Metrik berechnet wird.

7. Verfahren nach einem beliebigen der Ansprüche **1** bis **6,** wobei ein Lastprofil einen Array umfasst, der auf Zeiträumen indexiert ist und mindestens einen Lastwert über jeden besagter Zeiträume umfasst.

8. Verfahren nach Anspruch **7,** wobei besagter mindestens eine Lastwert ein gewichtetes Mittel der Verkehrswerte eines jeden Typs oder Verkehrs umfasst.

9. Verfahren nach Anspruch **8,** wobei die entsprechenden Gewichte besagten gewichteten Mittels umso höher sind, je verzögerungsempfindlicher der Typ oder Verkehr ist.

10. Verfahren nach einem beliebigen der Ansprüche **1** bis **9,** wobei ein Zeitprofil bestimmt wird, für jede Zelle (1), aus dem Lastprofil, durch Auswählen, für jeden Zeitraum, eines Betriebsmodus, durch Vergleichen besagten mindestens einen Lastwerts mit mindestens einem Schwellenwert.

**11.** Verfahren nach Anspruch **10,** wobei der besagte Vergleichsschritt mit einer Hysterese durchgeführt wird.

**12.** Verfahren nach Anspruch **10** oder **11,** wobei eine Profildistanz berechnet wird mittels einer k-Minkowski-Metrik, die auf entsprechende Schaltzeiten zwischen den Betriebsmodi angewendet wird, wie sie in den entsprechenden Zeitprofilen gefunden werden.

**13.** Verfahren nach einem beliebigen der Ansprüche **1** bis **12,** wobei ein Profil einer Zelle (1) von der Zelle (1) selbst gesammelt wird.

**14.** Clusterbildende Vorrichtung, die in der Lage ist, Zellen (1) in einem zellularen Netzwerk zu verwalten, wobei jede Zelle (1) in der Lage ist, in einem Betriebsmodus zu funktionieren, der ausgewählt wird mindestens aus "Durchsatzerhöhung" und "Energiesparen", wobei im Betriebsmodus "Durchsatzerhöhung" eine Zelle (1) konfiguriert ist zum Optimieren des Durchsatzes, während im Betriebsmodus "Energiesparen" eine Zelle (1) konfiguriert ist zum Reduzieren des Energieverbrauchs, umfassend:

- Zusammenstellungsvorrichtung zum Zusammenstellen von Zellen (1) in mindestens einem Cluster (4),
- Konfigurationsvorrichtung zum Konfigurieren von Zellen (1), die zum selben Cluster (4) gehören, zum gleichzeitigen Ändern ihres Betriebsmodus gemäß einem gemeinsamen Zeitprofil, **dadurch gekennzeichnet, dass** besagtes gemeinsame Zeitprofil für einen Cluster (4) bestimmt wird durch Ordnen der Zeitprofile der Zellen (1), die zu besagtem Cluster (4) gehören, mit Priorität bezüglich des anspruchsvollsten Betriebsmodus, wobei der Betriebsmodus "Durchsatzerhöhung" anspruchsvoller ist als ein "normaler" Betriebsmodus, welcher wiederum anspruchsvoller ist als der Betriebsmodus "Energiesparen".

**Revendications**

**1.** Procédé de gestion de cellules (1) dans un réseau cellulaire, chaque cellule (1) pouvant fonctionner dans un mode de fonctionnement choisi parmi au moins « l'élévation de rendement » et « l'économie d'énergie », dans lequel, en mode de fonctionnement à « élévation de rendement », une cellule (1) est configurée pour optimiser un rendement, dans lequel, en mode de fonctionnement à « économie d'énergie », une cellule (1) est configurée pour réduire la consommation d'énergie, le procédé comprenant les étapes suivantes :

- rassembler des cellules (1) en au moins un groupe (4),
- configurer des cellules (1) appartenant à un même groupe (4) pour changer simultanément leur mode de fonctionnement conformément à un profil temporel commun,

**caractérisé en ce que** ledit profil temporel commun est déterminé pour un groupe (4) en faisant une opération de réunion logique des profils temporels des cellules (1) appartenant audit groupe (4), le mode de fonctionnement le plus exigeant étant prioritaire, le mode de fonctionnement à « élévation de rendement » étant plus exigeant qu'un mode de fonctionnement « normal », qui a son tour est plus exigeant que le mode de fonctionnement à « économie d'énergie ».

**2.** Procédé selon la revendication **1,** dans lequel, en mode de fonctionnement à « élévation de rendement », une cellule (1) utilise un ensemble de signalisation dédiée à « élévation de rendement » pour dialoguer avec ses cellules voisines (1) et applique des techniques de partage de spectre coordonnées afin d'optimiser l'utilisation respective d'un spectre des radiofréquences par lesdites cellules (1) afin de réduire globalement des interférences et optimiser ainsi le rendement.

**3.** Procédé selon la revendication **1** ou **2,** dans lequel, en mode de fonctionnement à « économie d'énergie », une cellule (1) utilise un ensemble de signalisation dédiée à « économie d'énergie » pour dialoguer avec ses cellules voisines (1) et effectue des techniques de réduction de la consommation d'énergie afin de réduire globalement la consommation d'énergie.

**4.** Procédé selon l'une quelconque des revendications **1** à **3,** dans lequel l'étape de rassemblement comprend en outre l'étape suivante :

- rassembler des cellules (1) dont les positions géographiques sont distantes deux par deux par moins d'une valeur de seuil donnée dans un groupe (4).

**5.** Procédé selon l'une quelconque des revendications **1** à **4,** dans lequel l'étape de rassemblement comprend en outre l'étape suivante :

- rassembler des cellules (1) dont les profils sont globalement distants par moins d'une valeur de seuil donnée dans un groupe (4).

**6.** Procédé selon la revendication **4** ou la revendication **5,** dans lequel la distance géographique est calculée en utilisant une mesure de k-Minkowski.

**7.** Procédé selon l'une quelconque des revendications **1** à **6,** dans lequel un profil de charge comprend un réseau indexé sur des périodes temporelles et comprenant au moins une valeur de charge sur chacune desdites périodes temporelles.

**8.** Procédé selon la revendication **7,** dans lequel ladite au moins une valeur de charge comprend une moyenne pondérée des valeurs de trafic de chaque type de trafic.

**9.** Procédé selon la revendication **8,** dans lequel plus le type de trafic est sensible au temps plus les poids respectifs de ladite moyenne pondérée sont élevés.

**10.** Procédé selon l'une quelconque des revendications **1** à **9,** dans lequel un profil temporel est déterminé, pour chaque cellule (1), dans le profil de charge, en sélectionnant, pour chaque période temporelle, un mode de fonctionnement, en comparant ladite au moins une valeur de charge à au moins une valeur de seuil.

**11.** Procédé selon la revendication **10,** dans lequel ladite étape de comparaison est effectuée avec une hystérésis.

**12.** Procédé selon la revendication **10** ou **11,** dans lequel une distance de profil est calculée en utilisant une mesure de k-Minkowski appliquée à des temps de commutation respectifs entre des modes de fonctionnement que l'on trouve dans les profils temporels respectifs.

**13.** Procédé selon l'une quelconque des revendications **1** à **12,** dans lequel un profil d'une cellule (1) est collecté par la cellule (1) elle-même.

**14.** Dispositif de formation de groupe, pouvant gérer des cellules (1) dans un réseau cellulaire, chaque cellule (1) pouvant fonctionner dans un mode de fonctionnement choisi parmi au moins « l'élévation de rendement » et « l'économie d'énergie », dans lequel, en mode de fonctionnement à « élévation de rendement », une cellule (1) est configurée pour optimiser un rendement, dans lequel, en mode de fonctionnement à « économie d'énergie », une cellule (1) est configurée pour réduire la consommation d'énergie, comprenant :

    - des moyens de rassemblement pour rassembler des cellules (1) en au moins un groupe (4),
    - des moyens de configuration pour configurer des cellules (1) appartenant à un même groupe (4) pour changer simultanément leur mode de fonctionnement conformément à un profil temporel commun,

**caractérisé en ce que** ledit profil temporel commun est déterminé pour un groupe (4) en faisant une opération de réunion logique des profils temporels des cellules (1) appartenant audit groupe (4), le mode de fonctionnement le plus exigeant étant prioritaire, le mode de fonctionnement à « élévation de rendement » étant plus exigeant qu'un mode de fonctionnement « normal », qui a son tour est plus exigeant que le mode de fonctionnement à « économie d'énergie ».

FIG. 1

FIG. 2

FIG. 3

| 1 | 120 | 20 | 200 | 15 |
|---|---|---|---|---|
22                 09       12       13            18        22

FIG. 4

| ES | TB | N | TB | N |
|---|---|---|---|---|
22                 09       12       13            18        22

FIG. 5

| ES | N | N | TB | TB |
|---|---|---|---|---|
22                 09       12       13            18        22

FIG. 6

| ES | TB | N | TB | TB |
|---|---|---|---|---|
22                 09       12       13            18        22

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2004117226 A

**Non-patent literature cited in the description**

• Energy savings in mobile networks based on adaptation to traffic statistics. **OLIVIER BLUME et al.** Bell Labs Technical Journal. Wiley, 01 September 2010, vol. 15, 77-94